(19)

Europäisches Patentamt
European Patent Office
Office européen des brevets

(11) **EP 2 562 955 A1**

(12) **DEMANDE DE BREVET EUROPEEN**

(43) Date de publication:
**27.02.2013 Bulletin 2013/09**

(51) Int Cl.:
*H04L 7/04* (2006.01)

(21) Numéro de dépôt: **12180204.5**

(22) Date de dépôt: **13.08.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **25.08.2011 FR 1157507**

(71) Demandeur: **Diwel**
**35700 Rennes (FR)**

(72) Inventeur: **Cadic, Pascal**
**35000 Rennes (FR)**

(74) Mandataire: **Maillet, Alain et al**
**Cabinet Le Guen Maillet**
**5, place Newquay**
**B.P. 70250**
**35802 Dinard Cedex (FR)**

(54) **Dispositif de réception d'un signal numérique**

(57)    La présente invention concerne le domaine des récepteurs de signaux numériques dotés de moyens de synchronisation avec l'émetteur et plus particulièrement de moyens de synchronisation numériques.

L'invention décrit un procédé de synchronisation uniquement basé sur la mesure du temps de trame et du temps bit dans des accumulateurs. Ces mesures sont utilisées pour ajuster l'horloge d'échantillonnage du récepteur.

Fig. 4

EP 2 562 955 A1

**Description**

La présente invention concerne le domaine des récepteurs de signaux numériques dotés de moyens de synchronisation avec l'émetteur et plus particulièrement de moyens de synchronisation numériques.

On se place dans le cadre d'une transmission d'un train binaire constitué d'une suite de bits pouvant prendre la valeur 0 ou 1. Ce train binaire est généré par l'émetteur selon une période définie par son horloge interne.

Le récepteur pour réussir à recevoir le signal émis doit être en mesure d'échantillonner les bits émis en respectant la période de l'émetteur. Le récepteur dispose de sa propre horloge interne. Il est nécessaire de synchroniser ces horloges pour compenser la dérive due à une précision limitée des composants.

Cette synchronisation peut se faire à l'aide d'une référence extérieure commune, typiquement la réception d'un signal d'horloge émis par le système de positionnement global GPS (*Global Positioning System* en anglais).

Il est également connu d'utiliser une solution analogique. À partir d'informations injectées dans le signal par l'émetteur, on ajuste de manière continue un oscillateur de précision local afin d'aligner sa fréquence sur la fréquence de l'émetteur. Ceci est effectué à l'aide de composants du type PLL (*Phase Locked Loop* en anglais) ou encore VCO (*Voltage Controlled Oscillator* en anglais).

Ces solutions nécessitent des composants dont le coût est élevé pour des réalisations simples.

L'invention vise à résoudre les problèmes précédents par procédé de synchronisation uniquement basé sur la mesure du temps de trame et du temps bit dans des accumulateurs. Ces mesures sont utilisées pour ajuster l'horloge d'échantillonnage du récepteur.

L'invention concerne un dispositif de réception d'un signal numérique sous la forme d'un train de bits formant des trames de longueur fixe comportant un préambule constitué d'un nombre fixe de bits 0 et 1 en alternance, un mot de synchronisation bit comportant une transition isolée, un mot de synchronisation trame reproduisant une valeur déterminée et des données utiles, qui comporte des moyens de détection du préambule permettant de fournir une mesure du temps de transmission d'une trame et le moment du début de trame ; des moyens de détection de symbole pour aligner le récepteur sur les débuts de trame et des moyens d'acquisition pour échantillonner chaque bit du signal.

Selon un mode particulier de réalisation de l'invention, le dispositif comporte en outre des moyens d'ajustement de phase pour un calage précis de l'horloge bit sur le signal reçu.

Selon un mode particulier de réalisation de l'invention, le dispositif comporte en outre au moins un accumulateur pour effectuer des mesures, ledit accumulateur étant constitué d'au moins un registre dans lequel on accumule un nombre prédéterminé 'N' de mesures, le résultat de la mesure étant donné par la valeur accumulée divisée par ce nombre 'N' de mesures.

Selon un mode particulier de réalisation de l'invention, ledit accumulateur est constitué d'une pluralité 'R' de tels registres, l'initialisation des registres étant décalée dans le temps de façon à permettre d'obtenir un résultat toutes les 'N/R' mesures.

Selon un mode particulier de réalisation de l'invention, le dispositif comporte des moyens pour accumuler une même mesure au sein d'un ensemble d'accumulateurs fonctionnant avec des valeurs 'N' de nombre de mesures que l'on accumule avant de fournir un résultat différent.

Selon un mode particulier de réalisation de l'invention, le dispositif comporte en outre des moyens pour valider une mesure avant de l'accumuler consistant à comparer la mesure avec la précédente mesure validée et à ne la valider que si l'écart est inférieur à un seuil.

Selon un mode particulier de réalisation de l'invention, les moyens de détection de préambule comprennent des moyens pour détecter un nombre suffisant de transitions successives entre les valeurs 0 et 1 ; des moyens pour détecter la transition isolée du mot de synchronisation bit ; des moyens pour accumuler dans un accumulateur le moment de réception de cette transition isolée et des moyens pour fournir une mesure du temps trame lorsque l'accumulateur a accumulé un nombre suffisant de mesures, ainsi que le moment du début de trame.

Selon un mode particulier de réalisation de l'invention, les moyens de détection de symbole comprennent des moyens pour détecter le mot de synchronisation trame ; des moyens pour accumuler dans un accumulateur l'écart entre la position détectée et la position théorique donnée par un calcul basé sur les mesures de temps trame et de début de trame fournies par le module de détection de préambule et des moyens pour corriger le moment de début de trame de l'écart en bit obtenu.

Selon un mode particulier de réalisation de l'invention, les moyens d'acquisition comprennent des moyens d'échantillonner les bits d'une trame à partir des informations de début de trame et du temps bit théorique.

Selon un mode particulier de réalisation de l'invention, les moyens d'ajustement de phase comprennent des moyens pour détecter les transitions de la valeur 0 à la valeur 1 et de la valeur 1 à la valeur 0 dans le préambule ; des moyens pour accumuler dans un accumulateur l'écart entre le moment de la transition détectée et le moment calculé et des moyens pour corriger d'une unité de l'horloge locale du récepteur le moment du début de trame lorsqu'un écart est validé par ledit accumulateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 illustre les signaux mis en oeuvre dans un émetteur de données selon un exemple de réalisation de l'invention.

La Fig. 2 illustre la structure de la trame dans un exemple de réalisation de l'invention.

La Fig. 3 illustre la structure d'un accumulateur selon un exemple de réalisation de l'invention.

La Fig. 4 illustre la structure du récepteur selon un exemple de réalisation de l'invention.

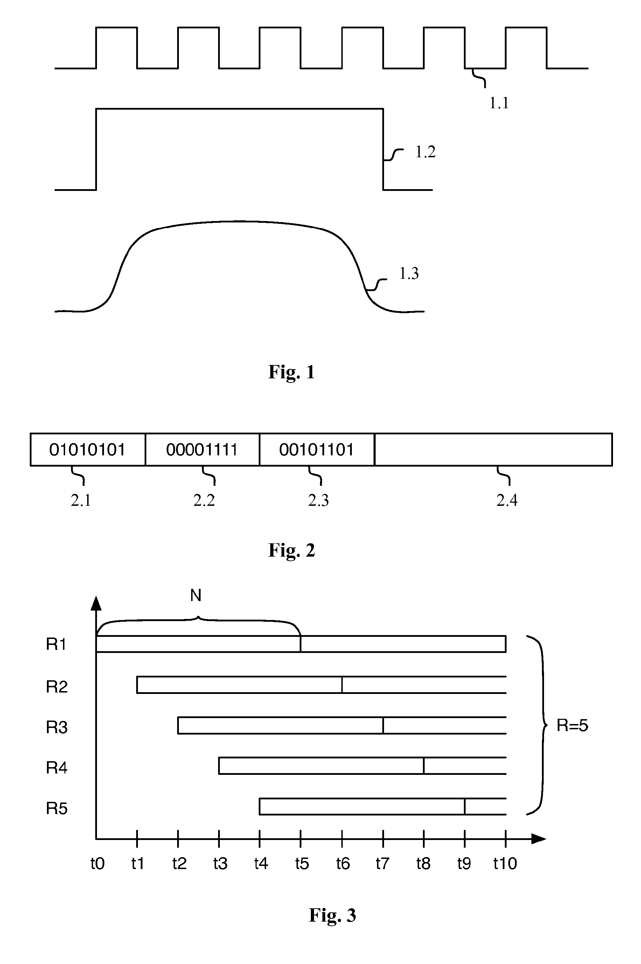

La Fig. 1 illustre les signaux mis en oeuvre dans un émetteur de données. L'émetteur dispose d'une horloge locale 1.1 fonctionnant à sa fréquence propre. Cette horloge subit une dérive dans le temps et possède une précision dépendant de la qualité des composants utilisés. À partir de cette horloge locale, on définit une horloge bits qui définit la fréquence d'émission des bits du signal à transmettre. Ce signal est illustré par la courbe 1.2 qui représente une version idéale de cette horloge. Cette horloge bit possède une période qui est typiquement un multiple entier de la période de l'horloge de base 1.1. Dans l'exemple représenté, l'horloge bit 1.2 possède une période de 7 fois l'horloge de base.

La courbe 1.3 représente l'évolution du signal réel lors de l'émission d'un bit. Par comparaison avec le signal théorique 1.2, on remarque que les transitions entre l'état 1 et l'état 0 ne peuvent pas être franchement verticales. Il est donc important qu'une mesure du signal en réception intervienne sur la partie centrale du temps bit pour être significative de la valeur du bit.

Le récepteur dispose de sa propre horloge locale. Celle-ci est théoriquement identique à l'horloge de l'émetteur. Mais du fait de la précision limitée des composants, les périodes des horloges de l'émetteur et du récepteur ne sont jamais parfaitement identiques. D'autre part, les horloges dérivent en fonction de leur environnement et plus particulièrement de la température, de la variation de leur tension d'alimentation, de chocs ou de vibrations. Dans les faits, il n'est donc pas possible de se baser sur des horloges locales pour garantir la réception du signal émis en l'absence d'un mécanisme de synchronisation des horloges.

On doit donc compenser l'écart absolu en fréquence entre l'émetteur et le récepteur, compenser la dérive du temps local par rapport au temps de l'émetteur et positionner au mieux le moment d'acquisition des données pour pallier la dégradation du signal transmis. Ce dernier point consiste à se positionner au plus près du milieu du temps bit pour l'acquisition de celui-ci.

La solution proposée est purement numérique, elle n'utilise que les ressources de traitement disponibles et ne requiert pas de composant additionnel du type PLL ou autre. Les seules contraintes imposées sont d'une part d'être en mesure de détecter une transition du signal transmis et d'autre part que l'horloge locale du récepteur ait une fréquence supérieure à la fréquence du signal transmis pour effectuer des mesures de temps suffisamment précises.

Selon l'exemple de réalisation de l'invention, les données sont envoyées sous la forme d'un train de bit constitué en trames de longueur fixe. La structure de la trame utilisée est illustrée par la Fig. 2. Elle se compose d'une première partie appelée préambule et référencée 2.1. Ce préambule est constitué d'un nombre fixe et suffisamment élevé de bits 1 et de bits 0 en alternance. Il sert à détecter le début d'une trame et à mesurer la période bit du signal émis. La longueur du préambule sera choisie comme un compromis entre la nécessité d'être assez long pour une mesure correcte de la période du signal et la nécessité de ne pas trop pénaliser la bande passante utilisée.

La trame comprend ensuite un mot de synchronisation bit 2.2 composé de plusieurs bits à 0 suivis de plusieurs bits à 1, ou inversement. Ce mot permet d'offrir une transition isolée facilement détectable. Cette transition va servir à mesurer le temps de transmission d'une trame.

La trame comprend ensuite avantageusement un mot de synchronisation trame 2.3. Ce mot reproduit une valeur déterminée pour marquer le début de la trame.

La trame comprend enfin les données utiles 2.4 (*payload* en anglais) à transmettre.

Le système nécessite de mesurer avec précision le temps bit et le temps trame, c'est-à-dire le temps de transmission d'un bit et le temps de transmission d'une trame. Ces temps sont mesurés par une arithmétique entière dont l'unité est l'horloge locale du récepteur. Cette horloge locale est un multiple de l'horloge d'émission, mais typiquement le coefficient de multiplication est faible compris entre 2 et quelques dizaines. Une mesure directe de ces temps est donc entachée d'une erreur de mesure relativement grande.

Pour pallier cette imprécision, la mesure va être faite à l'aide d'un accumulateur. C'est-à-dire que l'on mesure non plus le temps de transmission d'un bit ou d'une trame, mais le temps de transmission d'un nombre 'n' de bits ou de trames. Ensuite le temps bit et le temps trame sont obtenus par division entière du temps mesuré par le nombre de bits ou de trames transmis. La précision est dépendante du nombre 'n' d'occurrences mesurées. Cette précision s'obtient aux dépens de temps pris par la mesure. Par exemple, dans un système transmettant à 2Mbits/s avec 'n' égal à 250000, on obtient une nouvelle mesure du temps bit tous les 125 ms. Cette durée peut être pénalisante pour suivre les dérives en fréquence à court terme.

Pour pallier ce problème, on met en place un système d'accumulateur de mesures. Un accumulateur est composé d'une batterie de 'R' registres. A chaque mesure, le résultat est ajouté à chacun des registres. Dès qu'un registre a accumulé 'N' mesures, on dispose d'une moyenne pouvant être calculée par la division entière de la valeur du registre divisée par le nombre 'N' de mesures. On obtient ainsi un quotient et un reste qui doit être pris en compte lors d'utilisations successives de l'accumulateur pour en conserver la précision. On remet alors le registre à 0. Le résultat de la mesure est donc donné par la valeur accumulée divisée par ce nombre 'N' de mesures.

Chaque registre produit donc un résultat toutes les 'N' mesures.

Si l'on fait en sorte que l'initialisation de chaque registre soit décalée dans le temps on peut obtenir un résultat toutes les 'N/R' mesures.

Un tel accumulateur est illustré par la Fig. 3, le temps s'écoulant horizontalement. Au temps t0 on initialise le premier registre R1 à 0. Au temps t1 on initialise le second registre R2 à 0. Au temps t2 on initialise le troisième registre R3 à 0. Au temps t3 on initialise le quatrième registre R4 à 0. Au temps t4 on initialise le cinquième registre R5 à 0. Au temps t5, le premier registre R1 génère une première mesure et est réinitialisé à 0. Au temps t6, le second registre R2 génère une première mesure et est réinitialisé à 0. Au temps t7, le troisième registre R3 génère une première mesure et est réinitialisé à 0. Au temps t8, le quatrième registre R4 génère une première mesure et est réinitialisé à 0. Au temps t9, le cinquième registre R5 génère une première mesure et est réinitialisé à 0, et ainsi de suite.

Il est ainsi possible de concilier une bonne précision des mesures grâce à une valeur élevée de 'N'et une fréquence rapide d'obtention de ces mesures grâce à une valeur de 'R' relativement élevée. On peut déterminer ces valeurs de 'N' et 'R' en fonction de la précision et de la fréquence de mesure voulue. Si 'R=1', on retrouve un accumulateur disposant d'un seul registre et produisant un résultat toutes les 'N' mesures, avantageusement 'R' est supérieur à 1.

Avantageusement, pour fiabiliser les résultats particulièrement en présence de transmissions très bruitées, une étape supplémentaire de validation intervient. Le système d'accumulateur décrit produit un résultat toutes les 'N/R' mesures. Chacun des résultats produits va être soumis à une étape de validation. Selon le résultat de cette validation, le résultat sera conservé et utilisé si le résultat est considéré comme valide ou écarté s'il est considéré comme invalide.

Cette étape de validation peut consister à mesurer l'écart entre le dernier résultat produit et le précédent résultat produit et validé, on considère alors que le dernier résultat est valide si l'écart est inférieur à un seuil. On peut prendre comme valeur du seuil, la précision de l'accumulateur par exemple.

Avantageusement, si un nombre, supérieur à un seuil donné, de résultats successifs sont considérés comme non valides, l'accumulateur est marqué comme non valide et les nouveaux résultats sont comparés aux derniers résultats produits indépendamment de leur validité. Si un nombre suffisant de mesures est alors validé, l'accumulateur est à nouveau marqué comme valide.

Ces accumulateurs sont utilisés dans le récepteur pour mesurer les temps trames et les temps bits ainsi que la phase du signal reçu. Le récepteur fonctionne selon deux modes. Dans un premier mode, dit mode de recherche de synchronisation, le récepteur tente de détecter les paramètres de transmission, typiquement la fréquence d'émission, l'alignement bit, le début de la trame. Ce n'est qu'après avoir détecté ces paramètres qu'il peut entrer dans un mode dit d'acquisition qui lui permet de lire le signal reçu. On dit alors qu'il est synchronisé sur l'émetteur. Le récepteur continue alors à effectuer diverses mesures qui vont lui permettre de rester synchronisé.

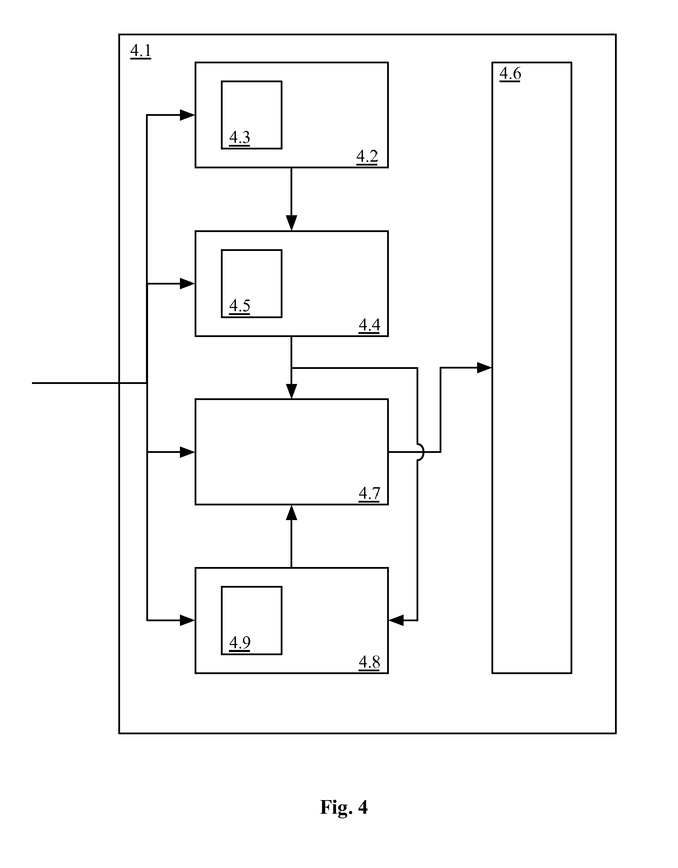

La Fig. 4 illustre un récepteur selon un mode de réalisation particulier de l'invention.

Le récepteur 4.1 dispose de moyens 4.2 pour détecter le préambule. Ces moyens sont implémentés sous la forme d'un module de détection du préambule. Le but de ce module est de fournir une mesure du temps trame, c'est-à-dire du temps de transmission d'une trame de données, ainsi que le moment de début de trame.

Pour ce faire, le module de détection de préambule comporte au moins un accumulateur 4.3 pour le calcul du temps trame. Avantageusement, il dispose d'un ensemble d'accumulateurs de différentes tailles. La taille de l'accumulateur est définie comme le nombre de mesures que l'on accumule avant de fournir un résultat. Le fait d'utiliser différentes tailles d'accumulateurs permet d'obtenir rapidement grâce aux accumulateurs de petite taille une première mesure du temps trame qui n'est pas très précise. Le temps passant, les accumulateurs de plus grande taille donnent des mesures de plus en plus précises de ce temps.

On considère que l'émetteur émet des données à la fréquence bit $F_{rx}$, conformée en trames de longueur $L_{trame}$. Le récepteur dispose d'une horloge locale de fréquence $F_{local}$ et doit générer la fréquence bit $F_{rx}$ de réception. $F_{local} = N_{rx} * F_{rx}$ où $N_{rx}$ est un coefficient multiplicateur entier.

Le récepteur échantillonne les données entrantes sur son horloge locale à une fréquence $F_{local}$ supérieure à la fréquence bit. Il tente de détecter les transitions successives du signal d'entrée qui correspondent aux transitions de la valeur 0 à la valeur 1 et de la valeur 1 à la valeur 0 présentes dans le préambule.

A ce moment, le système tente de valider le fait qu'il s'agit bien du préambule, c'est-à-dire qu'il détecte un nombre suffisant de transitions successives. Si la validité du préambule semble plausible, le système recherche alors la transition isolée de 0 à 1 présente dans le mot de synchronisation bit. Cette recherche est bornée dans le temps. Si cette transition n'est pas trouvée, le système se remet à chercher le préambule.

Lorsque la transition isolée est détectée, le moment de cette transition est mémorisé dans l'accumulateur, ou l'ensemble des accumulateurs, 4.3. Dès qu'une mesure du temps trame est disponible, il est possible de se positionner directement au début de la trame suivante pour une nouvelle détection du préambule et de la transition isolée. Le module de détection du préambule passe alors dans un mode d'acquisition. Dans les faits, on se positionne légèrement avant le moment théorique de début de trame suivante pour garantir le fonctionnement du système. Les mesures de temps trame sont donc accumulées dans l'ensemble d'accumulateurs 4.3 qui en donne une mesure de plus en plus précise au fur et à mesure que les accumulateurs de plus grande taille sont validés.

Avantageusement, dans ce mode d'acquisition, on ne valide la mesure et on la stocke dans les accumulateurs que si la transition isolée est trouvée avec un faible décalage par rapport à sa position temporelle théorique. Par exemple, seul un décalage de quelques bits est toléré.

Ce module nous permet donc un repositionnement régulier en début de trame. Sa précision n'est pas absolue et un décalage d'un ou deux bits se produit régulièrement.

Pour aligner le récepteur sur les débuts de trame, celui-ci dispose de moyens de détection de symbole. Ces moyens sont implantés sous la forme d'un module de détection de symbole 4.4. Ce module se charge de détecter le mot de synchronisation trame. Ce mot est constant et émis à une position fixe dans la trame. Ce module dispose d'au moins un accumulateur 4.5. Alternativement, le mot de synchronisation bit pourrait être également utilisé du fait de sa transition isolée pour le recalage bit.

Lorsque le récepteur est en mode de recherche de synchronisation, on accumule l'écart entre la position détectée et la position théorique donnée par un calcul basé sur les mesures de temps trame et du moment de début de trame fournies par le module de détection de préambule 4.2. Avantageusement, un ensemble d'accumulateurs de différentes tailles est utilisé.

Lorsqu'au moins un accumulateur est valide depuis un temps suffisant, on considère que l'on a acquis un écart valide. On corrige alors le temps de début de trame de l'écart en bit obtenu et on réinitialise les accumulateurs. On peut alors passer au mode d'acquisition de données. Dans ce mode d'acquisition, on continue avantageusement la détection du mot de synchronisation trame.

Dès lors, on est calé sur le début de trame au bit près, il est donc possible d'échantillonner les données et de les transmettre au module de traitement 4.6.

L'acquisition des données est effectuée par le récepteur à l'aide des moyens d'acquisition sous la forme d'un module d'acquisition 4.7. Le module d'acquisition utilise le moment de début de trame donné par les deux modules précédents et le temps bit théorique pour calculer le moment d'échantillonnage de chaque bit de la trame. L'acquisition est faite par échantillonnage de chaque bit du signal.

La taille de la trame est définie de manière à ce que l'écart en fréquence entre l'oscillateur de l'émetteur et celui du récepteur soit inférieur à une partie de la durée d'un bit sur la durée de la trame.

Par exemple, en considérant un écart maximum de 200 ppm (partie par million) entre les deux oscillateurs, on se décale d'un bit tous les 5000 bits. On peut alors choisir une trame de longueur 2048 et des oscillateurs dont la précision est supérieure à 20 ppm. Dans ce cas, sur la durée d'une trame, on aura un décalage maximum inférieur à un cinquième de bit entre le début et la fin de la trame. Si l'on fait en sorte que l'accumulateur nous positionne correctement au milieu d'un bit en début de trame, la dérive instantanée peut être masquée.

Pour effectuer ses acquisitions de données, le système attend le moment donné par l'accumulateur, puis ajoute régulièrement le temps d'une période bit. La période bit est donnée par la multiplication du facteur $N_{rx}$ par l'horloge locale. Si l'on note $T_{acc}(0)$ le moment de début de trame donné par l'accumulateur, les bits sont échantillonnés aux moments -$T_{acc}(0)$ + $N_{rx}$ * I, où I est l'indice du bit à échantillonner dans la trame.

Avantageusement, le récepteur est également doté de moyens d'ajustement de phase. Ces moyens sont implantés sous la forme d'un module 4.8 d'ajustement de phase. Ce module a pour but d'ajuster précisément le temps bit au cycle d'horloge local près, pour permettre un échantillonnage des bits situés sensiblement au milieu du temps bit. Ce faisant on améliore la fiabilité de la lecture et on diminue le taux d'erreur.

L'ajustement de phase se fait sur le préambule en mode de recherche de synchronisation et en mode d'acquisition. Le module détecte les transitions de la valeur 0 à la valeur 1 et de la valeur 1 à la valeur 0. Du fait que le préambule est constitué d'une suite alternée de valeur 0 et de valeur 1, le temps entre deux transitions correspond normalement au temps bit. On mesure donc ce temps et on écarte les mesures où ce temps s'éloigne au-delà d'un certain seuil du temps bit théorique. Par exemple, on valide la tolérance peut-être de 10%.

Lorsque la mesure est validée pour un nombre de mesures supérieur à un seuil donné, on accumule dans au moins un accumulateur 4.9 l'écart entre le moment de la transition mesurée et le moment calculé à l'aide de l'accumulateur, c'est-à-dire le moment $T_{acc}(0)$ + $N_{rx}$ * I. On continue ainsi jusqu'à validation de l'accumulateur.

Lorsque l'on valide un écart constant, on corrige alors le lecteur en utilisant l'écart ainsi mesuré. Avantageusement, pour éviter de sur-corriger le système, on admet uniquement des corrections d'une seule valeur de l'horloge locale. Si le décalage est plus important, il faudra alors reprendre le processus et valider le nouveau décalage avant de corriger d'une nouvelle valeur de l'horloge locale. On continue ainsi jusqu'à obtenir une valeur de décalage nulle. Ainsi en quelques trames, on obtient un calage précis de l'horloge bit sur le signal reçu.

Ces corrections consistent à déterminer une valeur appelée Offset qui est fournie au module d'acquisition. Dans ce mode de réalisation, l'acquisition utilise la formule :

$$T_{acc}(0) + N_{rx} * I + \text{Offset} ;$$

pour déterminer le temps bit. On note que le premier bit est alors échantillonné au temps $T_{acc}(0)$ + Offset.

L'invention ainsi décrite permet de synchroniser un récepteur sur un émetteur sans utiliser de composant analogique. L'utilisation d'ensembles d'accumulateurs de taille variable permet une synchronisation rapide et une grande précision en mode établi. L'invention peut être utilisée dans tout type de récepteur, filaire ou sans fil, de signaux numériques modulés.

## Revendications

1. Dispositif de réception d'un signal numérique sous la forme d'un train de bits formant des trames de longueur fixe comportant un préambule constitué d'un nombre fixe de bits 0 et 1 en alternance, un mot de synchronisation bit comportant une transition isolée, un mot de synchronisation trame reproduisant une valeur déterminée et des données utiles, **caractérisé en ce qu'**il comporte :

   - des moyens de détection du préambule permettant de fournir une mesure du temps de transmission d'une trame et le moment du début de trame ;
   - des moyens de détection de symbole pour aligner le récepteur sur les débuts de trame ;
   - des moyens d'acquisition pour échantillonner chaque bit du signal.

2. Dispositif selon la revendication 1 **caractérisé en ce qu'**il comporte en outre :

   - de moyens d'ajustement de phase pour un calage précis de l'horloge bit sur le signal reçu.

3. Dispositif selon l'une des revendications 1 ou 2, **caractérisé en ce qu'**il comporte en outre au moins un accumulateur pour effectuer des mesures, ledit accumulateur étant constitué d'au moins un registre dans lequel on accumule un nombre prédéterminé 'N' de mesures, le résultat de la mesure étant donné par la valeur accumulée divisée par ce nombre 'N' de mesures.

4. Dispositif selon la revendication 3, **caractérisé en ce que** ledit accumulateur est constitué d'une pluralité 'R' de tels registres, l'initialisation des registres étant décalée dans le temps de façon à permettre d'obtenir un résultat toutes les 'N/R' mesures.

5. Dispositif selon l'une des revendications 3 ou 4, **caractérisé en ce qu'**il comporte des moyens pour accumuler une même mesure au sein d'un ensemble d'accumulateurs fonctionnant avec des valeurs 'N' de nombre de mesures que l'on accumule avant de fournir un résultat différent.

6. Dispositif selon l'une des revendications 3 à 5, **caractérisé en ce qu'**il comporte en outre des moyens pour valider une mesure avant de l'accumuler consistant à comparer la mesure avec la précédente mesure validée et à ne la valider que si l'écart est inférieur à un seuil.

7. Dispositif selon l'une des revendications 3 à 6, **caractérisé en ce que** les moyens de détection de préambule comprennent :

   - des moyens pour détecter un nombre suffisant de transitions successives entre les valeurs 0 et 1 ;
   - des moyens pour détecter la transition isolée du mot de synchronisation bit ;
   - des moyens pour accumuler dans un accumulateur le moment de réception de cette transition isolée ;
   - des moyens pour fournir une mesure du temps trame lorsque l'accumulateur a accumulé un nombre suffisant de mesures, ainsi que le moment du début de trame.

8. Dispositif selon l'une des revendications 3 à 7, **caractérisé en ce que** les moyens de détection de symbole comprennent :

   - des moyens pour détecter le mot de synchronisation trame ;
   - des moyens pour accumuler dans un accumulateur l'écart entre la position détectée et la position théorique donnée par un calcul basé sur les mesures de temps trame et de début de trame fournies par le module de détection de préambule ;
   - de moyens pour corriger le moment de début de trame de l'écart en bit obtenu.

9. Dispositif selon l'une des revendications 3 à 8, **caractérisé en ce que** les moyens d'acquisition comprennent :

   - des moyens d'échantillonner les bits d'une trame à partir des informations de début de trame et du temps bit théorique.

10. Dispositif selon l'une des revendications 3 à 8, **caractérisé en ce que** les moyens d'ajustement de phase comprennent :

   - des moyens pour détecter les transitions de la valeur 0 à la valeur 1 et de la valeur 1 à la valeur 0 dans le préambule ;
   - des moyens pour accumuler dans un accumulateur l'écart entre le moment de la transition détectée et le moment calculé ;
   - des moyens pour corriger d'une unité de l'horloge locale du récepteur le moment du début de trame lorsqu'un écart est validé par ledit accumulateur.

**11.** Procédé de réception, par un dispositif de réception, d'un signal numérique transmis sous la forme d'un train de bits formant des trames de longueur fixe comportant un préambule constitué d'un nombre fixe de bits 0 et 1 en alternance, un mot de synchronisation bit comportant une transition isolée, un mot de synchronisation trame reproduisant une valeur déterminée et des données utiles, **caractérisé en ce que** le dispositif de réception effectue les étapes suivantes :

- détection du préambule permettant de fournir une mesure du temps de transmission d'une trame et le moment du début de trame ;
- détection de symbole pour aligner le récepteur sur les débuts de trame ;
- acquisition pour échantillonner chaque bit du signal.

**Fig. 1**

| 01010101 | 00001111 | 00101101 | |
|----------|----------|----------|---|

2.1       2.2       2.3       2.4

**Fig. 2**

**Fig. 3**

**Fig. 4**

**EP 2 562 955 A1**

Europäisches
Patentamt

European
Patent Office

Office européen
des brevets

**RAPPORT DE RECHERCHE EUROPEENNE**

Numéro de la demande

EP 12 18 0204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2002/168034 A1 (YANG GANNING [US] ET AL) 14 novembre 2002 (2002-11-14) | 1-3,11 | INV. H04L7/04 |
| A | * alinéa [0002] *<br>* alinéa [0016] - alinéa [0019] *<br>* alinéa [0047] *<br>* figures 2,3 *<br>* abrégé * | 4-10 | |
| | ----- | | |
| Y | US 2007/135079 A1 (BROMLEY STEVEN D [US]) 14 juin 2007 (2007-06-14) | 1-3,11 | |
| A | * alinéa [0007] *<br>* alinéa [0010] *<br>* alinéa [0023] *<br>* alinéa [0029] *<br>* alinéa [0032] - alinéa [0033] *<br>* alinéa [0044] *<br>* figures 1-3 *<br>* abrégé * | 4-10 | |
| | ----- | | |
| Y | WO 2010/091556 A1 (HUAWEI TECHNOLOGIES CO LTD) 19 août 2010 (2010-08-19) | 1-3,11 | DOMAINES TECHNIQUES RECHERCHES (IPC) |
| A | * page 5, ligne 19 - ligne 24 *<br>* figure 2 *<br>-& EP 2 395 725 A1 (HUAWEI TECH CO LTD [CN]) 14 décembre 2011 (2011-12-14)<br>* alinéa [0005] *<br>* alinéa [0019] *<br>* alinéa [0022] - alinéa [0024] *<br>* alinéa [0037] - alinéa [0038] *<br>* figure 2 * | 4-10 | H04L H04J |
| | ----- | | |
| | -/-- | | |

Le présent rapport a été établi pour toutes les revendications

| Lieu de la recherche | Date d'achèvement de la recherche | Examinateur |
|---|---|---|
| La Haye | 31 août 2012 | Marongiu, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

10

Europäisches
Patentamt

European
Patent Office

Office européen
des brevets

# RAPPORT DE RECHERCHE EUROPEENNE

Numéro de la demande

EP 12 18 0204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 4 596 024 A (THOMSON DAVID J [US]) 17 juin 1986 (1986-06-17) | 1-3,11 | |
| A | * colonne 4, ligne 7 - ligne 14 * <br> * colonne 4, ligne 46 - ligne 53 * <br> * colonne 10, ligne 46 - ligne 50 * <br> * colonne 14, ligne 43 - ligne 49 * <br> * colonne 19, ligne 62 - ligne 68 * <br> * figure 2 * <br> ----- | 4-10 | |
| A | US 5 052 026 A (WALLEY GEORGE M [US]) 24 septembre 1991 (1991-09-24) <br> * colonne 1, ligne 6 - ligne 9 * <br> * colonne 2, ligne 42 - ligne 59 * <br> * figures 1,2 * <br> ----- | 1-11 | |
| A | SCHREMPP W ET AL: "UNIQUE WORD DETECTION IN DIGITAL BURST COMMUNICATIONS", IEEE TRANSACTIONS ON COMMUNICATION TECHNOLOGY, IEEE INC. NEW YORK, US, vol. COM-16, no. 4, 1 août 1968 (1968-08-01), pages 597-605, XP001028019, DOI: 10.1109/TCOM.1968.1089882 <br> * page 597 * <br> * figures 1,2 * <br> ----- | 1-11 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 31 août 2012 | Marongiu, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 18 0204

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2012

| Document brevet cité au rapport de recherche | | | Date de publication | Membre(s) de la famille de brevet(s) | | Date de publication |
|---|---|---|---|---|---|---|
| US 2002168034 | A1 | | 14-11-2002 | AUCUN | | |
| US 2007135079 | A1 | | 14-06-2007 | US 2007135079 A1 | | 14-06-2007 |
| | | | | WO 2007070735 A2 | | 21-06-2007 |
| WO 2010091556 | A1 | | 19-08-2010 | CN 102301670 A | | 28-12-2011 |
| | | | | EP 2395725 A1 | | 14-12-2011 |
| | | | | US 2011311235 A1 | | 22-12-2011 |
| | | | | WO 2010091556 A1 | | 19-08-2010 |
| EP 2395725 | A1 | | 14-12-2011 | CN 102301670 A | | 28-12-2011 |
| | | | | EP 2395725 A1 | | 14-12-2011 |
| | | | | US 2011311235 A1 | | 22-12-2011 |
| | | | | WO 2010091556 A1 | | 19-08-2010 |
| US 4596024 | A | | 17-06-1986 | CA 1240797 A1 | | 16-08-1988 |
| | | | | DE 3482757 D1 | | 23-08-1990 |
| | | | | EP 0148198 A1 | | 17-07-1985 |
| | | | | JP S60501387 A | | 22-08-1985 |
| | | | | US 4596024 A | | 17-06-1986 |
| | | | | WO 8404860 A1 | | 06-12-1984 |
| US 5052026 | A | | 24-09-1991 | AU 618169 B2 | | 12-12-1991 |
| | | | | AU 4910990 A | | 23-08-1990 |
| | | | | CA 2007535 A1 | | 07-08-1990 |
| | | | | US 5052026 A | | 24-09-1991 |

EPO FORM P0460

Pour tout renseignement concernant cette annexe : voir Journal Officiel de l'Office européen des brevets, No.12/82